# FASCICULE DE BREVET EUROPEEN

(11) **EP 0 378 476 B1**
(45) Date de publication et mention de la délivrance du brevet: **28.04.1993**
(21) Numéro de dépôt: 90400070.0
(22) Date de dépôt: 10.01.1990
(51) Int. Cl.: H02G 3/08

(54) **Boîte à opercule(s) défonçable(s) pour appareil à encastrer, notamment pour appareil électrique**
Dose mit ausbrechbaren Öffnungen für Einbaugeräte, insbesondere für elektrische Geräte
Box with knock-out openings for a flush-mounted apparatus, in particular an electrical apparatus

(30) Priorité: 11.01.1989 FR 8900270
(43) Date de publication de la demande: 18.07.1990
(73) Titulaire: LEGRAND, F-87045 Limoges Cédex (FR)
(72) Inventeur: Parlatore, Roger, F-87920 Condat (FR); Da Rocha, Jacques, F-87350 Panazol (FR); Combas, Christian, F-87240 Ambazac (FR)
(74) Mandataire: CABINET BONNET-THIRION

(56) Documents cités:
- WO-A-85/01396
- FR-A- 2 140 886
- US-A- 2 068 988

## Description

La présente invention concerne d'une manière générale les boîtes, communément dites boîtes de préfabrication, qui, lors de la réalisation d'un mur ou d'une cloison, sont mises en place sur la banche ou le coffrage correspondant avant la coulée du béton, pour ménager dans celui-ci la réserve nécessaire au logement d'un quelconque appareil, et par exemple d'un quelconque appareil électrique, tel que prise de courant ou interrupteur, à encastrer dans un tel mur ou dans une telle cloison.

Elle vise plus particulièrement le cas où, pour le raccordement, à une telle boîte, d'une gaine servant de logement aux conducteurs électriques propres à la desserte de l'appareil concerné, il est prévu, sur cette boîte, que ce soit sur sa paroi latérale ou que ce soit sur son fond, une entrée permettant à cette gaine de déboucher dans son volume intérieur.

En pratique, il est prévu, en attente, une pluralité de telles entrées, pour que l'installateur puisse choisir à son gré parmi celles-ci la mieux adaptée à l'orientation particulière de la gaine qu'il a à implanter.

Pour que, lors de la coulée du béton, la boîte ne soit pas envahie, les entrées inutilisées doivent être obturées par un opercule.

Il en est donc systématiquement de même pour l'ensemble des entrées ainsi présentes sur une boîte.

Pour l'élimination de l'opercule de celle de ces entrées qui est à mettre en oeuvre, il est possible de procéder par découpe, soit à l'aide d'une machine spéciale, soit à l'aide d'un couteau.

Mais l'usage d'une machine spéciale suppose la présence de celle-ci sur le chantier.

Une découpe effectuée au couteau, quant à elle, peut entraîner un endommagement préjudiciable de l'ensemble si l'opération correspondante est mal conduite.

Il a également été proposé de rendre défonçables les opercules d'une boîte, en délimitant chacun d'eux par une ligne de moindre résistance.

A ce jour, l'élimination d'un tel opercule défonçable se fait par enfoncement.

Comme une découpe au couteau, l'opération correspondante peut entraîner un endommagement de l'ensemble si elle est mal exécutée.

La présente invention a d'une manière générale pour objet une disposition permettant d'éviter un tel endommagement.

De manière plus précise, elle a pour objet une boîte pour appareil à encastrer, en particulier pour appareil électrique, du genre comportant au moins une entrée, avec, obturant ladite entrée, un opercule défonçable délimité par une ligne de moindre résistance, cette boîte étant d'une manière générale caractérisée en ce que ledit opercule défonçable est équipé d'une tirette, qui en est solidaire, et qui est de nature à faciliter l'exercice d'une traction sur lui.

Grâce à cette tirette, qui, en pratique, est d'un seul tenant avec l'opercule défonçable, l'élimination de celui-ci se fait par simple arrachement, et non plus par enfoncement ou par découpe.

Certes, il est prévu, dans le brevet américain No US-A-2.068.988, d'associer à un opercule un élément, en l'espèce un opercule défonçable auxiliaire, susceptible d'être relevé par rapport à lui.

Cet opercule défonçable auxiliaire ne constitue pas, même lorsqu'il est relevé, une tirette au sens de la présente invention.

En effet, outre que la saillie qu'il forme initialement sur l'opercule défonçable principal n'est pas suffisante pour qu'il puisse être directement saisi, et que, si une quelconque traction était exercée sur lui une fois qu'il est relevé, elle ne pourrait que conduire à le détacher de cet opercule défonçable principal, cet opercule défonçable auxiliaire n'a pas d'autre fonction que de ménager, dans l'opercule défonçable principal, une ouverture propre à permettre l'insertion d'un outil permettant ensuite d'agir sur lui.

La tirette suivant l'invention permet au contraire d'agir directement en traction sur l'opercule défonçable à éliminer.

De préférence, cette tirette se présente sous la forme d'un plot massif dont la section transversale comporte, parallèlement l'un à l'autre, deux méplats, cette section transversale étant par exemple rectangulaire.

La saisie de la tirette s'en trouve facilitée et affermie, et elle peut avantageusement être pratiquée à l'aide d'une pince, outil commun sur un chantier, l'emprise des mâchoires d'une telle pince sur une telle tirette se trouvant avantageusement favorisée par la présence de méplats sur celle-ci.

De préférence, également, la tirette est solidaire d'une languette, qui, prédécoupée par des lignes de moindre résistance dans l'opercule défonçable, s'étend d'abord par exemple suivant sensiblement un rayon de celui-ci avant de se raccorder ensuite sensiblement tangentiellement à son contour périphérique.

L'arrachement de l'opercule défonçable s'en trouve facilité, cet arrachement n'intéressant d'abord que la seule languette qui y est prédécoupée, et ne nécessitant ainsi initialement qu'un effort relativement minime, avant de s'étendre ensuite à l'ensemble de cet opercule.

Le contrôle de l'effort d'arrachement ainsi obtenu est favorable à l'obtention d'une découpe parfaitement régulière pour l'entrée dégagée par l'élimination de l'opercule défonçable l'obturant initialement.

Suivant un développement de l'invention, il est tiré parti de cette découpe régulière pour permettre un encliquetage, sur la boîte, de la gaine à engager dans celle-ci à la faveur d'une telle entrée.

Suivant ce développement, la ligne de moindre résistance délimitant l'opercule défonçable résultant d'une gorge affectant en creux la surface de celui-ci, le fond de cette gorge s'étend radialement en retrait par rapport à la périphérie de cet opercule.

Il en résulte que, après élimination de la partie de l'opercule défonçable délimitée par la gorge, la portion périphérique subsistante de cet opercule forme, annulairement, en saillie vers l'axe de l'entrée, un cran propre à la retenue de la gaine engagée dans cette entrée, notamment si, comme il est usuel, il s'agit d'un tube annelé.

Les caractéristiques et avantages de l'invention ressortiront d'ailleurs de la description qui va suivre, à titre d'exemple, en référence aux dessins schématiques annexés sur lesquels :

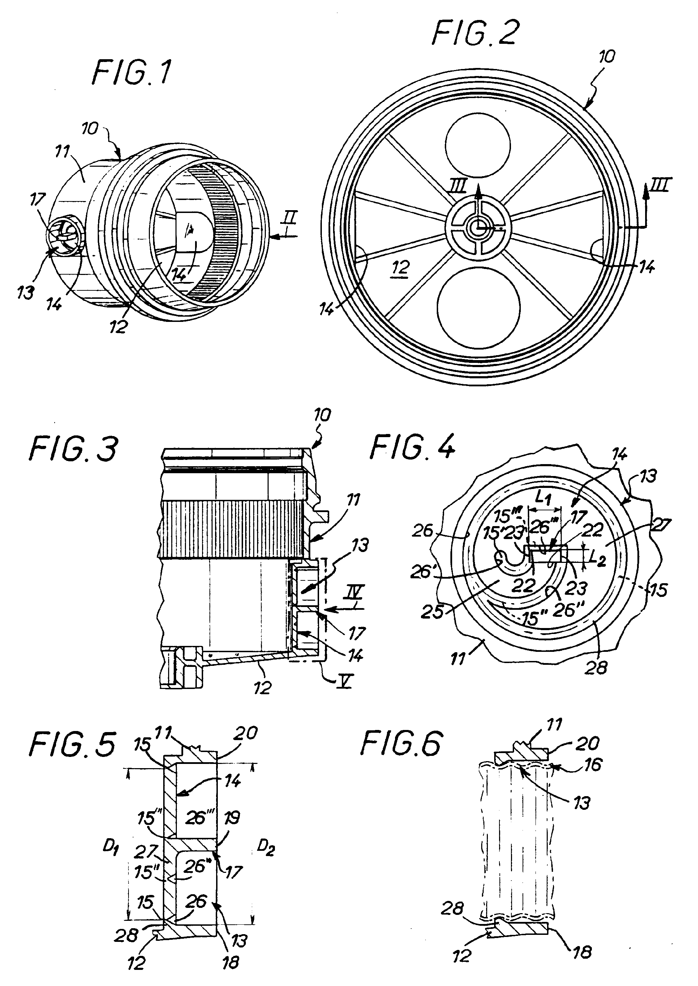

la figure 1 est une vue en perspective d'une boîte suivant l'invention ;
la figure 2 en est, à échelle supérieure, une vue en plan, suivant la flèche II de la figure 1 ;
la figure 3 en est une vue partielle en coupe axiale, suivant la ligne III-III de la figure 2 ;
la figure 4 en est, à échelle encore supérieure, une vue partielle en élévation, suivant la flèche IV de la figure 3 ;
la figure 5 est une vue partielle en coupe axiale reprenant, à l'échelle de la figure 4, le détail de la figure 3 repéré par un encart V sur cette figure 3, avant élimination de l'opercule défonçable concerné ;
la figure 6 est une vue partielle en coupe axiale analogue à celle de la figure 5, après élimination de cet opercule défonçable.

Tel qu'illustré sur ces figures, la boîte suivant l'invention, qui est une boîte de préfabrication pour appareil à encastrer, notamment pour appareil électrique, et qui est destinée à être noyée dans la masse de béton constitutive d'un mur ou d'une cloison à équiper d'un tel appareil, présente, de manière connue en soi, outre un équipement qui, ne relevant pas de la présente invention, n'a pas été représenté sur les figures et ne sera pas décrit ici, un corps de boîte 10, à paroi latérale 11 et fond 12.

Dans la forme de réalisation représentée, la section de ce corps de boîte 10 est circulaire.

Par mesure de simplicité, la boîte suivant l'invention sera, le plus souvent, assimilée, dans ce qui suit, à son seul corps de boîte 10, et seuls en seront décrits les éléments nécessaires à la compréhension de l'invention.

De manière connue en soi, la boîte suivant l'invention comporte au moins une entrée 13, avec, obturant cette entrée 13, un opercule défonçable 14 délimité par une ligne de moindre résistance 15.

S'agissant, en pratique, et tel que schématisé en traits interrompus à la figure 6, de permettre, au montage, l'engagement, dans le corps de boîte 10, d'une gaine 16, qui, destinée au logement de conducteurs électriques, est de contour transversal circulaire, l'entrée 13 a elle-même un contour transversal circulaire à l'image de celui de cette gaine 16, et il en est de même pour l'opercule défonçable 14 qui l'obture.

Dans la forme de réalisation représentée, la gaine 16 est constituée par un tube annelé.

En pratique, dans cette forme de réalisation, deux entrées 13 sont prévues, en positions diamétralement opposées l'une par rapport à l'autre, sur la paroi latérale 11 du corps de boîte 10, à proximité immédiate de son fond 12.

Suivant l'invention, l'opercule défonçable 14 obturant une telle entrée 13 est équipé d'une tirette 17, qui en est solidaire, et qui est de nature à faciliter l'exercice d'une traction sur lui.

En pratique, cette tirette 17 est d'un seul tenant avec l'opercule défonçable 14 qu'elle affecte, et elle se présente sous la forme d'un plot massif, qui s'enracine dans la zone centrale de cet opercule défonçable 14, et qui s'étend sensiblement perpendiculairement au plan de celui-ci.

De préférence, et tel que représenté, l'opercule défonçable 14 formant le fond d'un puits 18, qui fait saillie sur la surface externe de la paroi latérale 11, et la tirette 17 correspondante faisant elle-même saillie sur la surface externe de cet opercule défonçable 14, l'extrémité libre 19 de cette tirette 17 s'étend sensiblement à niveau avec le débouché 20 de ce puits 18.

De préférence, et tel que représenté, la section transversale de la tirette 17 présente, parallèlement l'un à l'autre, deux méplats 22.

En pratique, cette section transversale est rectangulaire, et les méplats 22 en forment les côtés de plus grande longueur.

Dans la forme de réalisation représentée, les méplats 22 constituant ainsi les côtés de plus grande longueur de la section transversale de la tirette 17 ont une longueur L1 au moins deux fois supérieure à celle L2 des côtés de plus petite longueur 23 de cette section transversale.

De préférence, également, et tel qu'il est également représenté, la tirette 17 est solidaire d'une languette 25 prédécoupée par des lignes de moindre résistance 15', 15'' dans l'opercule défonçable 14.

Dans la forme de réalisation représentée, cette languette 25 est issue de la tirette 17, et elle s'étend d'abord suivant sensiblement un rayon de l'opercule défonçable 14, sensiblement perpendiculairement à la direction d'allongement de la section transversale de la tirette 17, puis elle se raccorde ensuite sensiblement tangentiellement au contour périphérique de cet opercule défonçable 14.

Les lignes de moindre résistance 15', 15'' qui la délimitent s'étendent elles-mêmes chacune respecticement suivant des demi-cercles concentriques, dont l'un, celui correspondant à la ligne de moindre résistance 15', est en porte-à-faux, tandis que l'autre se raccorde tangentiellement au cercle suivant lequel s'étend la ligne de moindre résistance 15, et, par contournement de la tirette 17, elles se raccordent l'une l'autre par une ligne de moindre résistance 15‴.

En pratique, les lignes de moindre résistance 15, 15', 15'', 15‴ résultent de gorges 26, 26', 26'', 26‴ affectant en creux la surface externe de l'opercule défonçable 14, et elles se trouvent en quelque sorte matérialisées par le fond de celles-ci.

De préférence, le fond de la gorge 26 dont résulte la ligne de moindre résistance 15 délimitant l'opercule défonçable 14 s'étend radialement en retrait par rapport à la périphérie de cet opercule défonçable 14.

Autrement dit, ce fond de gorge s'étend suivant une circonférence de diamètre D1 inférieur au diamètre D2 de la circonférence suivant laquelle s'étend la surface interne du puits 18 qui délimite l'opercule défonçable 14, et, pour ce dernier, il forme frontière entre une portion centrale 27, avec laquelle la languette 25 est en continuité, et une portion périphérique 28, au contact de la surface interne du puits 18.

Celui au moins des flancs de la gorge 26 qui s'étend du côté de la périphérie de l'opercule défonçable 14 est oblique par rapport à l'axe de l'entrée 13 concernée, en se rapprochant de cet axe au fur et à mesure qu'il s'écarte de ladite périphérie.

Dans la forme de réalisation représentée, l'autre des flancs de cette gorge 26 est également oblique sur l'axe de l'entrée 13, mais en sens inverse par rapport au flanc précédent.

Les dispositions sont du même ordre pour les gorges 26', 26''.

Par contre, pour la gorge 26‴, seul l'un des flancs est oblique par rapport à l'axe de l'entrée 13, l'autre de ces flancs étant en continuité avec le méplat 22 correspondant de la tirette 17 et s'étendant de ce fait parallèlement à cet axe.

Ainsi qu'il est aisé de le comprendre, le corps de boîte 10 ainsi constitué peut avantageusement être réalisé d'un seul tenant en matière synthétique, par moulage de celle-ci.

Pour faciliter ce moulage, l'opercule défonçable 14 de ses entrées 13 est établi en saillie à l'intérieur du volume délimité par sa paroi latérale 11, en s'étendant parallèlement l'un à l'autre, suivant des cordes de cette paroi latérale 11, et ils s'y trouvent chacun délimités par un contour en anse, dont les branches parallèles dirigées vers le fond 12, se raccordent l'une à l'autre par un demi-cercle à l'opposé de celui-ci.

Pour l'élimination de l'opercule défonçable 14 obturant une entrée 13, il suffit d'exercer sur la tirette 17 correspondante, à l'aide par exemple d'une pince, une traction suffisante pour assurer, d'abord l'arrachement progressif de la languette 25 à laquelle est attenante cette tirette 17, puis celui de l'ensemble de la portion centrale 27 de cet opercule défonçable 14 avec laquelle cette languette 25 est en continuité.

Tel que représenté à la figure 6, il subsiste, alors, radialement en saillie vers l'axe de l'entrée 13, sur la surface interne du puits 18, la portion périphérique 28 de l'opercule défonçable 14.

Tel que schématisé en traits interrompus sur la figure 6, la gaine 16 vient s'y encliqueter.

Bien entendu, la présente invention ne se limite pas à la forme de réalisation décrite et représentée, mais englobe toute variante d'exécution.

En particulier, le nombre d'entrées que comporte la boîte suivant l'invention est indifférent, et ces entrées peuvent être prévues non seulement sur la paroi latérale de cette boîte mais également sur son fond.

## Revendications

1. Boîte pour appareil à encastrer, en particulier pour appareil électrique, du genre comportant au moins une entrée (13), avec, obturant ladite entrée, un opercule défonçable (14) délimité par une ligne de moindre résistance (15), caractérisée en ce que ledit opercule défonçable (14) est équipé d'une tirette (17), qui en est solidaire, et qui est de nature à faciliter l'exercice d'une traction sur lui.

2. Boîte suivant la revendication 1, caractérisée en ce que la tirette (17) est d'un seul tenant avec l'opercule défonçable (14).

3. Boîte suivant l'une quelconque des revendications 1, 2, caractérisée en ce que la tirette (17) se présente sous la forme d'un plot massif.

4. Boîte suivant la revendication 3, caractérisée en ce que la tirette (17) s'étend sensiblement perpendiculairement au plan de l'opercule défonçable (14).

5. Boîte suivant la revendication 4, caractérisée en ce que, l'opercule défonçable (14) formant le fond d'un puits (18), l'extrémité libre (19) de la tirette (17) s'étend sensiblement à niveau avec le débouché (20) dudit puits (18).

6. Boîte suivant l'une quelconque des revendications 3 à 5, caractérisée en ce que la section transversale de la tirette (17) présente, parallèlement l'un à l'autre, deux méplats (22).

7. Boîte suivant la revendication 6, caractérisée en ce que la section transversale de la tirette (17) est rectangulaire.

8. Boîte suivant la revendication 6, caractérisée en ce que le côté de plus grande longueur (22) de la section transversale de la tirette (17) a une longueur (L1) au moins deux fois supérieure à celle (L2) de son côté de plus petite longueur (23).

9. Boîte suivant l'une quelconque des revendications 1 à 8, caractérisée en ce que la tirette (17) s'enracine dans la zone centrale de l'opercule défonçable (14).

10. Boîte suivant la revendication 9, caractérisée en ce que la tirette (17) est solidaire d'une languette (25) prédécoupée par des lignes de moindre résistance (15', 15'') dans l'opercule défonçable (14).

11. Boîte suivant la revendication 10, caractérisée en ce que la languette (25) s'étend d'abord suivant sensiblement un rayon de l'opercule défonçable (14), puis se raccorde ensuite sensiblement tangentiellement au contour périphérique de celui-ci.

12. Boîte suivant l'une quelconque des revendications 1 à 11, caractérisée en ce que, la ligne de moindre résistance (15) délimitant l'opercule défonçable (14) résultant d'une gorge (26) affectant en creux la surface de celui-ci, le fond de ladite gorge (26) s'étend radialement en retrait par rapport à la périphérie dudit opercule défonçable (14).

13. Boîte suivant la revendication 12, caractérisée en ce que celui au moins des flancs de ladite gorge (26) qui s'étend du côté de la périphérie de l'opercule défonçable (14) est oblique par rapport à l'axe de l'entrée (13) concernée, en se rapprochant de cet axe au fur et à mesure qu'il s'écarte de ladite périphérie.

## Patentansprüche

1. Dose für einzulassende Geräte, insbesondere elektrische Geräte, die wenigstens einen Eingang (13) mit einem diesen Eingang verschließenden, ausbrechbaren Deckel (14) umfaßt, der durch eine Linie geringerer Festigkeit (15) abgegrenzt ist, dadurch gekennzeichnet, daß der ausbrechbare Deckel (14) mit einem mit ihm fest verbundenen Zugelement (17) versehen ist, das so beschaffen ist, daß es das Ausüben eines Zuges auf ihn erleichtert.

2. Dose nach Anspruch 1, dadurch gekennzeichnet, daß das Zugelement mit dem ausbrechbaren Deckel (14) ein Stück bildet.

3. Dose nach einem der Ansprüche 1, 2, dadurch gekennzeichnet, daß das Zugelement (17) die Form eines massiven Klotzes hat.

4. Dose nach Anspruch 3, dadurch gekennzeichnet, daß das Zugelement (17) sich im wesentlichen senkrecht zur Ebene des ausbrechbaren Deckels (14) erstreckt.

5. Dose nach Anspruch 4, dadurch gekennzeichnet, daß, wenn der ausbrechbare Deckel (14) den Boden eines Schachts (18) bildet, das freie Ende (19) des Zugelements (17) sich im wesentlichen in einer Höhe mit der Mündung (20) dieses Schachts (18) erstreckt.

6. Dose nach einem der Ansprüche 3 bis 5, dadurch gekennzeichnet, daß der Querschnitt des Zugelements (17) parallel zueinander zwei Abflachungen (22) aufweist.

7. Dose nach Anspruch 6, dadurch gekennzeichnet, daß der Querschnitt des Zugelements (17) rechteckig ist.

8. Dose nach Anspruch 6, dadurch gekennzeichnet, daß die Seite (22) größerer Länge des Querschnitts des Zugelements (17) eine Länge (L1) hat, die wenigstens zweimal größer als die (L2) seiner Seite (23) kleinerer Länge ist.

9. Dose nach einem der Ansprüche 1 bis 8, dadurch gekennzeichnet, daß das Zugelement (17) in der zentralen Zone des ausbrechbaren Deckels (14) wurzelt.

10. Dose nach Anspruch 9, dadurch gekennzeichnet, daß das Zugelement (17) mit einer Zunge (25) fest verbunden ist, die durch Linien (15', 15") geringerer Festigkeit in dem ausbrechbaren Deckel (14) vorgestanzt ist.

11. Dose nach Anspruch 10, dadurch gekennzeichnet, daß die Zunge (25) sich zunächst im wesentlichen auf einem Radius des ausbrechbaren Deckels (14) erstreckt und dann im wesentlichen tangential an dessen Umfangsumriß anschließt.

12. Dose nach einem der Ansprüche 1 bis 11, dadurch gekennzeichnet, daß, wenn die den ausbrechbaren Deckel (14) abgrenzende Linie (15) geringerer Festigkeit sich aus einer Nut (26) ergibt, die auf dessen Oberfläche ausgespart ist, der Boden dieser Nut (26) sich radial bezüglich des Umfangs des ausbrechbaren Deckels (14) zurückversetzt erstreckt.

13. Dose nach Anspruch 12, dadurch gekennzeichnet, daß wenigstens diejenige der Flanken der Nut (26), die sich auf der Seite des Umfangs des ausbrechbaren Deckels (14) erstreckt, bezüglich der Achse des betreffenden Eingangs (13) schräg ist, indem sie sich dieser Achse in dem Maße nähert, wie sie sich von diesem Umfang entfernt.

## Claims

1. A box for a device to be flush-mounted, in particular for an electrical device, of the kind comprising at least one inlet (3) with, closing said inlet, a knock-out closure portion (14) which is defines by a line (15) of lower strength, characterised in that said knock-out closure portion (14) is provided with a pulling portion (17) which is fixed with respect thereto and which is of such as a nature as to facilitate the application of a pulling force thereto.

2. A box according to claim 1 characterised in that the pulling portion (17) is in one piece with the knock-out closure portion (14).

3. A box according to either one of claims 1 and 2 characterised in that the pulling portion (17) is in the form of a solid stud.

4. A box according to claim 3 characterised in that the pulling portion (17) extends substantially perpendicularly to the plane of the knock-out closure portion (14).

5. A box according to claim 4 characterised in that, the knock-out closure portion (14) forming the bottom of a well (18), the free end (19) of the pulling portion (17) extends substantially in line with the opening (20) of said well (18).

6. A box according to any one of claims 3 to 5 characterised in that the cross-section of the pulling portion (17) has two flats (22) in parallel relationship with each other.

7. A box according to claim 6 characterised in that the cross-section of the pulling portion (17) is rectangular.

8. A box according to claim 6 characterised in that the side (22) of greater length of the cross-section of the pulling portion (17) is of a length (L1) which is at least twice that (L2) of its side (23) of shorter length.

9. A box according to any one of claims 1 to 8 characterised in that the pulling portion (17) is connected to the knock-out closure portion (14) in the central region thereof.

10. A box according to claim 9 characterised in that the pulling portion (17) is fixed with respect to a tongue portion (25) which is pre-cut-out by lines (15', 15") of lower strength in the knock-out closure portion (14).

11. A box according to claim 10 characterised in that the tongue portion (25) first extends substantially along a radius of the knock-out closure portion (14) and is then connected substantially tangentially to the peripheral contour thereof.

12. A box according to any one of claims 1 to 11 characterised in that, the line (15) of lower strength which defines the knock-out closure portion (14) resulting from a groove (26) provided in recessed relationship in the surface thereof, the bottom of said groove (26) extends radially in set-back relationship with respect to the periphery of said knock-out closure portion (14).

13. A box according to claim 12 characterised in that that one at least of the flanks of said groove (26) which extends at the side of the periphery of the knock-out closure portion (14) is inclined with respect to the axis of the inlet (13) in question, going towards said axis as it goes away from said periphery.
